# EUROPEAN PATENT APPLICATION

(11) **EP 4 779 582 A1**
(43) Date of publication of application: **22.07.2026**
(21) Application number: 25152352.8
(22) Date of filing: 16.01.2025
(51) Int. Cl.: G06V 10/74, G06V 20/20, G06V 20/56

(54) **ASSIST SYSTEM FOR A FORESTRY MACHINE, FORESTRY MACHINE, METHOD OF ASSISTING AN OPERATOR OF A FORESTRY MACHINE AND COMPUTER PROGRAM**

(71) Applicant: Deere & Company, Moline, IL 61265 (US)
(72) Inventor: KAARNAMETSÄ, Johannes, Mannheim (DE); KOKKONEN, Jane, Mannheim (DE); PUTKONEN, Aki, Mannheim (DE); SILTANEN, Vesa, Mannheim (DE)
(74) Representative: Berggren Oy

(57) **Abstract**

The assist system for a forestry machine (20, 30) comprises means (2) for obtaining position data of the forestry machine (20, 30), an imaging device (3) configured to obtain images of the surroundings of the machine, data processing means (1) configured to link the position data with the obtained images, a data storage (5, 6) for storing the images and the position data, and a display device (4) configured to display images of the surroundings of the machine to an operator of the machine in real time. The data processing means (1) are configured to compare real time images (10R) to images (10S) stored in the data storage (5, 6), augment the real time images (10R) with information contained in the stored images (10S), and/or augment the stored images (10S) with information contained in the real time images (10R), and display the augmented images (10A) to the operator.

## Description

### Technical field of the invention

The invention concerns an assist system for a forestry machine, as defined in claim 1. The invention also concerns a forestry machine, a computer-implemented method of assisting an operator of a forestry machine, a computer program for assisting an operator of a forestry machine, and a computer-readable storage medium.

### Background of the invention

Forestry machines, such as harvesters and forwarders, need to be operated in different weather and lighting conditions. Work in a certain area may be performed over a long period of time by different machines. During this period, different weather conditions can be encountered, and the work is often performed both in day light and in dark. When trees are felled and piled and thereafter loaded onto forwarders, the environment changes. Also, growing or withering vegetation and growing and falling leaves change the environment.

Snow on the ground, darkness, heavy rain or fog may make the work of a forestry machine operator difficult. For instance, if log piles to be loaded onto a forwarder are covered by snow, they are difficult to locate. The same applies to tracks on the ground.

### Summary of the invention

An object of the invention is to provide an assist system for a forestry machine. Another object of the invention is to provide a computer-implemented method of assisting an operator of a forestry machine. Further objects of the invention are to provide a forestry machine, a computer program for assisting an operator of a forestry machine and a computer-readable storage medium.

The system according to the invention comprises
- means for obtaining position data of the forestry machine,
- one or more imaging devices configured to obtain images of the surroundings of the forestry machine during operation of the forestry machine,
- data processing means configured to link the obtained position data of the forestry machine with the obtained images,
- a data storage configured to store the images obtained by the imaging devices and the position data linked with the obtained images, and
- a display device configured to display images of the surroundings of the forestry machine to an operator of the forestry machine in real time.

The data processing means are configured
- to compare real time images obtained by the imaging devices to images stored in the data storage,
- to augment the real time images with information contained in the images stored in the data storage, and/or to augment the images stored in the data storage with information contained in the real time images, and
- to display the augmented images by means of the display device to the operator of the forestry machine.

The forestry machine according to the invention comprises the assist system defined above.

The method according to the invention comprises the steps of
- obtaining position data of the forestry machine,
- obtaining images of the surroundings of the forestry machine by means of one or more imaging devices during operation of the forestry machine,
- linking the obtained position data of the forestry machine with the obtained images,
- storing the images obtained by the imaging devices and the position data linked with the obtained images in a data storage,
- comparing real time images obtained by the imaging devices to images stored in the data storage,
- augmenting the real time images with information contained in the images stored in the data storage, and/or augmenting the images stored in the data storage with information contained in the real time images, and
- displaying the augmented images by means of a display device to the operator of the forestry machine.

The computer program according to the invention comprises instructions which, when the program is executed by a computer, cause an assist system comprising one or more imaging devices, means for obtaining position data of the forestry machine, a data storage and a display device to carry out the method define above.

The computer-readable storage medium according to the invention has stored thereon the computer program defined above.

The system and the method according to the invention assist the operator of the forestry machine in particular when the visibility is reduced and/or the detail level of the real time images is reduced. Depending on the situation, either stored images augmented with real time information or real time images augmented with stored information can be displayed to the operator. For instance, if the quality of real time images is good, but some details are not visible, the real time images may be augmented to show the missing details. If the quality of the real time images is poor, but changes in the environment are relatively small, a good quality stored image could be augmented with real time information and displayed to the operator.

The system can be configured to display the augmented images to the operator in real time. The expression "real time" means in this context that the augmented images are displayed to the operator immediately after the necessary data processing such that the operator can use the augmented images when operating the forestry machine. The augmented images can be shown as a video stream that is delayed only by the time needed for processing the images. The delay could be, for example, less than 0.5 seconds. The stored images can be images obtained by the imaging devices of the forestry machine. However, the stored images can also comprise images obtained by the imaging devices of one or more other forestry machines. Especially when the forestry machine arrives at a certain location for the first time, the stored images can consist of images obtained by the imaging devices of one or more other forestry machines.

The invention allows the operator to work effectively and safely for example when the ground is covered by snow and certain objects, such as logs and tracks, are not clearly visible, or when the visibility is reduced for example due to darkness, fog or heavy rain. The invention helps making harvesting and picking of logs more effective, improves safety and helps to minimize harm to the environment. The stored images can also be used for many other purposes, such as for tracking the progress of work and for planning and prediction purposes.

According to an embodiment of the invention, the data processing means are configured to identify a situation with a reduced visibility and/or a reduced detail level of the real time images, and to carry out the steps of augmenting the images and displaying the augmented images in case such a situation is detected. If the visibility and the detail level of the real time images are sufficient, the real time images can be displayed to the operator without augmentation. Even if the real time images are not augmented, the information contained in the real time images can be used for augmenting the images stored in the data storage. This allows utilizing the new stored information in later work phases.

According to an embodiment of the invention, the data processing means are configured to augment the images stored in the data storage based on information contained in the real time images and to store the augmented versions of the stored images in the data storage. This allows, for example, tracking of the work progress.

According to an embodiment of the invention, the system comprises one or more sub-systems and/or sensors for obtaining other data than image data of the surroundings of the forestry machine, and the data processing means are configured to augment the real time images and/or the images stored in the data storage based on the data obtained by said sub-systems and sensors. According to an embodiment of the invention, the one or more sub-systems comprise one or more systems from the group of radar, lidar and ultrasonic ranging system. By collecting other data than image data, the images can be augmented with information that cannot be obtained by the imaging devices. This further facilitates the work of the operator of the forestry machine. The information collected by the additional sensors and sub-systems can also be used for verifying the information contained in the images. The data could comprise, for example, the number of logs in a certain log pile and/or the volume of the logs in the log pile. This data could be obtained by analyzing the images obtained by the imaging devices, but data provided by different sensors may be more accurate. For instance, when trees are felled and cut by a harvester, sensors of the harvester can be used for determining the volumes of the logs.

This information can be later displayed in the augmented images to the operator of a forwarder. The data could also comprise information on the characteristics of the logs, such as the tree species and the quality of the logs.

According to an embodiment of the invention, the data processing means are configured to obtain information on the current work phase of the forestry machine and to augment the images based on the work phase. The information on the current work phase can be obtained automatically from the control systems of the forestry machines, or it may be input by the operator of the forestry machine. When the work phase is used as an input, the images can be augmented with information that is most relevant for the specific work phase. For instance, if the work phase is loading of logs onto a forwarder, the location of logs is highly relevant for the operator of the forwarder, and the location of logs can be highlighted in the augmented images. If the work phase is a transition drive from one location to another location, the position of the tracks may be the most relevant information.

According to an embodiment of the invention, the data processing means are configured to augment the real time images to show objects that are not visible in the real time images due to the weather conditions, changes in the vegetation and/or darkness. For instance, if logs or tracks are not visible due to snow conditions, the real time images can be augmented using data contained in images obtained before snowfall.

According to an embodiment of the invention, the data processing means are configured to augment the real time images to show the locations of logs to the operator of the forestry machine.

According to an embodiment of the invention, the data storage comprises images obtained by imaging devices of at least one other forestry machine. The forestry machine can thus utilize the data obtained by another forestry machine. For example a forwarder operating in a work site in poor weather conditions could thus utilize images obtained earlier by a harvester in better weather conditions.

According to an embodiment of the invention, the system is configured to transmit the obtained images to a central data storage and/or to local data storages of one or more other forestry machines to make the obtained images available to assist systems of said other forestry machines. By sharing the data, the operation of all the forestry machines operating at the work site is made more effective. The sharing of the data also allows tracking the progress of the work.

According to an embodiment of the invention, the forestry machine is a harvester or a forwarder.

### Brief description of the drawings

Embodiments of the invention are described below in more detail with reference to the accompanying drawings, in which
Fig. 1 shows an example of a forestry machine,
Fig. 2 shows another example of a forestry machine,
Fig. 3 shows as a block diagram a system according to an embodiment of the invention,
Fig. 4 shows an example of an image stored in a database,
Fig. 5 shows an example of a real time image obtained in the same location as the stored image of Fig. 4,
Fig. 6 shows the real time image of Fig. 5 as augmented with information contained in the stored image, and

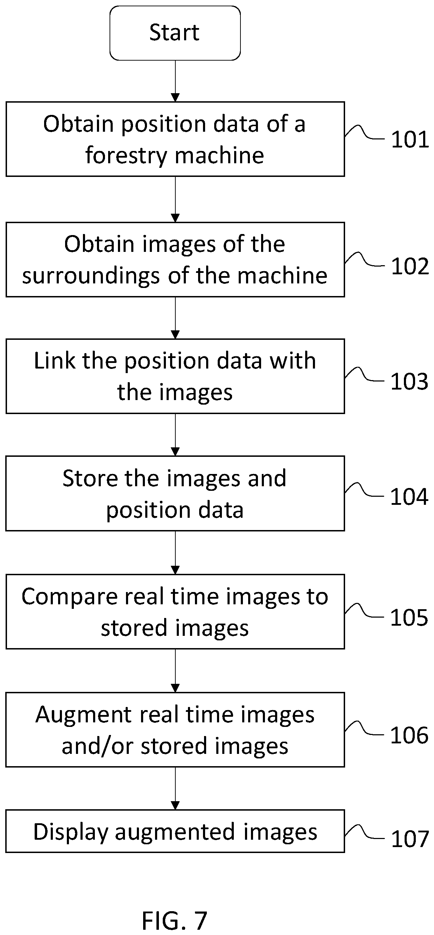

Fig. 7 shows the method according to the invention as a flowchart.

### Detailed description of embodiments of the invention

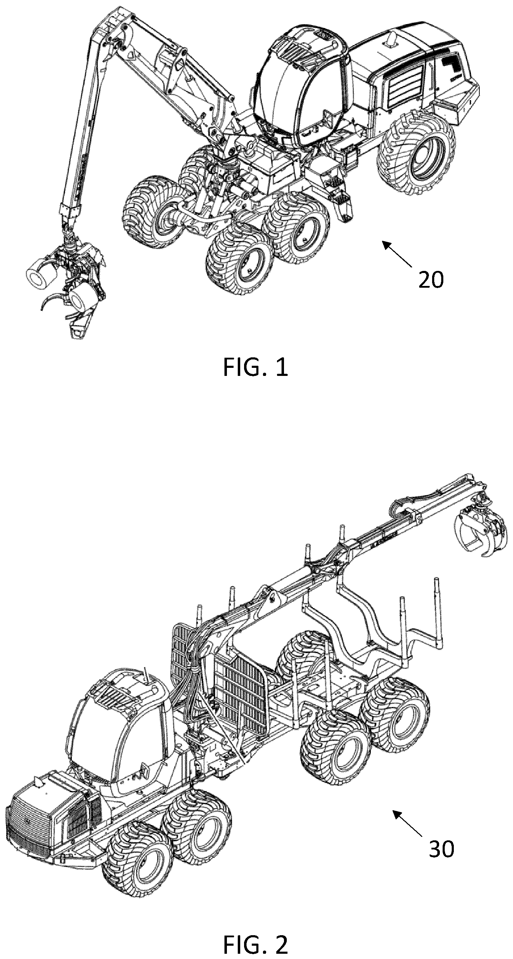

The present invention concerns an assist system for a forestry machine 20, 30. The forestry machine can be, for example, a harvester 20 or a forwarder 30. Figure 1 shows an example of a harvester 20 and figure 2 shows an example of a forwarder 30. The term "harvester" refers here to a vehicle that is configured to be used at least for felling trees. The harvester can be additionally configured to be used for delimbing the trees. The harvester may be further configured to be used for bucking the trees. The harvester may be configured for cut-to-length operation, where the harvester is used for felling, delimbing and bucking the trees. The term "forwarder" refers here to a vehicle that is configured to pick up the felled logs and to transport them from the felling site to a roadside or other place where the logs can be later loaded onto a truck or otherwise transported forward. The forestry machine may be a wheeled vehicle, a tracked vehicle, or even a walking vehicle, or the forestry machine may comprise both wheels and tracks. The forestry machine could also be a combined harvester forwarder, which can perform operations of both a harvester and a forwarder.

Harvesters 20 and forwarders 30 need to be operated in different weather and lighting conditions. Work in a certain area may be performed over a long period of time by different machines. The trees are felled and cut by means of one or more harvesters 20 and the logs are transported from the work site by means of one or more forwarders 30. The work phase implemented by means of the forwarder 30 may follow the work phase implemented by means of the harvester 20, or the work phases may be overlapping. Transporting of the logs may thus take place while the felling and cutting of the trees continues.

During the work performed in the work site, different weather conditions can be encountered. Also the environment changes when the trees are felled and the produced logs are piled and thereafter loaded onto the forwarder 30. Furthermore, growing or withering vegetation and growing and falling leaves change the environment.

Snow on the ground, darkness, heavy rain or fog may make the work of a forestry machine operator difficult. For instance, if log piles to be loaded onto a forwarder 30 are covered by snow, they are difficult to locate. Also, the tracks on the grounds may be difficult to detect. In some cases, it may be preferable to use the existing tracks to minimize harm to the environment. However, if the tracks are in a poor condition, it may be preferable to avoid the tracks.

The assist system according to the invention helps the operator to conduct the work in different conditions by collecting and storing data and using the collected data to augment images displayed to the operator of the forestry machine 20, 30.

The assist system comprises means 2 for obtaining position data of the forestry machine 20, 30. The means 2 for obtaining position data can comprise, for example, a satellite navigation device that is configured to receive signals from the satellites of one or more satellite navigation systems, such as GPS and Galileo. The satellite navigation device can be further configured to communicate with a ground-based reference station to increase the accuracy of the satellite navigation. Instead of, or in addition to a satellite navigation device, the means 2 for obtaining position data could comprise other positioning means, for example a positioning device that is configured to communicate solely with one or more ground-based reference stations.

The assist system further comprises one or more imaging devices 3 configured to obtain images of the surroundings of the forestry machine 20, 30 during operation of the forestry machine 20, 30. The imaging devices 3 may comprise one or more cameras that are installed to the forestry machine 20, 30. One or more of the imaging devices 3 may be mounted to a boom of the forestry machine and one or more of the imaging devices 3 may be mounted in the cabin of the forestry machine 20, 30 and/or onto the roof of the cabin. The cameras may be configured to produce images 360 degrees around the forestry machine 20, 30. In addition to the cameras installed to the forestry machine 20, 30, the imaging devices 3 could comprise a camera that is mounted to a drone to produce an aerial view of the surroundings of the forestry machine 20, 30. Each imaging device 3 preferably produces a continuous video stream. The imaging devices 3 may be configured to operate in the wavelength range of visible light. However, one or more of the imaging devices could be configured to operate outside the wavelength range of visible light. For instance, the imaging devices could comprise a thermal imaging device. A thermal imaging device could help, for example, to identify living objects.

The assist system further comprises data processing means 1. The data processing means 1 are configured to link the obtained position data of the forestry machine 20, 30 with the obtained images. The system may be further configured to obtain orientation data representing the orientation of each of the imaging devices 3. Also the orientation data may be linked with the obtained images. The system can be configured to apply a time stamp to each obtained image. Each obtained image may thus contain metadata, which includes the position where the image has been obtained, the orientation of the imaging device 3 that obtained the image and/or a time stamp indicating when the image has been obtained.

The data processing means 1 may comprise one or more computers. The data processing means 1 may comprise at least one local data processing device that is installed in the forestry machine 20, 30. The data processing device may be a dedicated data processing device that is dedicated to processing of the images, or the data processing device may also have other functions. The data processing means 1 may additionally comprise one or more remote data processing devices that are located outside the forestry machine 20, 30. One or more of the remote data processing devices may be located outside the work site. The system may comprise wireless communication means for communicating with the remote data processing devices. Different parts of the processing of the images may be implemented by different data processing devices. Part of the processing of the images could thus take place in a local data processing device and part of the processing of the images could take place in a remote data processing device.

The assist system further comprises at least one data storage 5, 6 for storing the images obtained by the imaging devices 3 and the position data and orientation data linked with the obtained images. The data storages 5, 6 may comprise at least one local data storage 5 that is installed in the forestry machine 20, 30. The system may additionally comprise at least one remote data storage 6. The remote data storage may be a central data storage 6. The data processing means 1 can communicate with the remote data storage 6 via wireless communication means.

The assist system comprises a display device 4 that is configured to display images of the surroundings of the forestry machine 20, 30 to an operator of the forestry machine 20, 30 in real time. The display device 4 may be installed in the cabin of the forestry machine 20, 30. However, the forestry machine 20, 30 could be remotely operated, and the display device 4 could be remotely located in the place where the operator is operating the forestry machine 20, 30. The assist system may comprise two or more display devices 4, for example for showing images obtained by different imaging devices 3 of the forestry machine 20, 30 to show different views. Different display devices 4 could also be configured to display images obtained at different instants of time. The display device 4 could also be a virtual reality headset configured to be worn by the operator of the forestry machine 20, 30.

Real time images 10R obtained by the imaging devices 3 are stored in the data storage 5, 6 together with the position data and other possible meta data, such as the orientation data and the time stamps. The data storage 5, 6 may comprise several images obtained in the same location at different instants of time.

The data processing means 1 are configured to compare the real time images 10R obtained by the imaging devices 3 to the images 10S stored in the data storage 5, 6. By comparing the real time images 10R to the stored images 10S, differences between the real time images 10R and the stored images 10S can be detected. Certain information may be contained in the stored images 10S but not in the real time images 10R or vice versa. The data processing means 1 are further configured to augment the real time images 10R with information contained in the images 10S stored in the data storage 5, 6. Alternatively, or in addition, the data processing means 1 can augment the images 10S stored in the data storage 5, 6 with information contained in the real time images 10R. The data processing means 1 are further configured to display the augmented images 10A by means of the display device 4 to the operator of the forestry machine 20, 30. If the data storage 5, 6 contains several stored images 10S obtained from the same location and having the same viewing angle, the system can select the most suitable stored image 10S to be augmented and to be displayed to the operator as the augmented image 10A. The selection can be based on, for instance, the work phase and/or the quality and the up-to-date-ness of the stored images 10S. If the real time images 10R are augmented, information from several stored images 10S can be used.

Augmentation of the images is beneficial especially when the visibility is reduced, for example due to snowing, darkness or fog, or when the detail level of the real time images 10R is reduced, for example due to snow cover. Therefore, the data processing means 1 can be configured to identify a situation with a reduced visibility and/or a reduced detail level of the real time images and to carry out the steps of augmenting the images and displaying the augmented images 10A in case such a situation is detected.

If the visibility is good, the data processing means 1 can display to the operator the real time images 10R, and the information contained in the real time images 10R can be used for augmenting the stored images 10S. For example, if trees have been felled and/or new tracks have been formed, the stored images 10S can be augmented to reflect these changes. The augmented versions of the stored images 10S can be stored in the data storage 5, 6. The augmented versions can either replace the stored images or the augmented versions can be stored as additional images.

In addition to the augmented images 10A, also other images can be displayed to the operator. For example, one display device 4 could display to the operator augmented real time images 10A, and another display device 4 could display to the operator stored images 10S. Different images could also be displayed by the same display device 4 side-by-side. The assist system can be configured to allow the operator to select the images to be displayed.

The system can comprise one or more sub-systems 7 and/or sensors for obtaining other data than image data of the surroundings of the forestry machine 20, 30. The sub-systems can comprise, for example, a radar, lidar, and/or an ultrasonic ranging system. The sub-systems can provide additional data that cannot be obtained using the imaging devices 3. The data obtained by the sub-systems 7 and sensors can be used for augmenting the real time images 10R and/or the stored images 10S. Alternatively, or in addition, the data obtained by the sub-systems 7 and sensors can be used for verifying and/or improving the accuracy of the data contained in the images. The information obtained by the sub-systems and sensors could comprise, for instance, the number of logs in a certain log pile, the volume of the logs, and/or information concerning the characteristics of the logs, such as the tree species and the quality of the logs. Such information could be collected for example by means of sensors located in a harvester head of a harvester. The real time images augmented with the additional data can be displayed to the operator, and augmented versions of the stored images can be stored in the data storage 5, 6.

The data processing means 1 can be configured to obtain information on the current work phase of the forestry machine 20, 30. The information can be obtained automatically, for example based on the type of the forestry machine 20, 30 and/or the operation of the forestry machine, or the work phase can be input into the system by the operator. The images can be augmented based on the work phase. For instance, the images can be augmented with different information based on the work phase. For instance, if the work phase is loading of the logs onto a forwarder 20, the images can be augmented to highlight the locations of piles of logs. In case of a transition drive, the location of tracks may be important information to display.

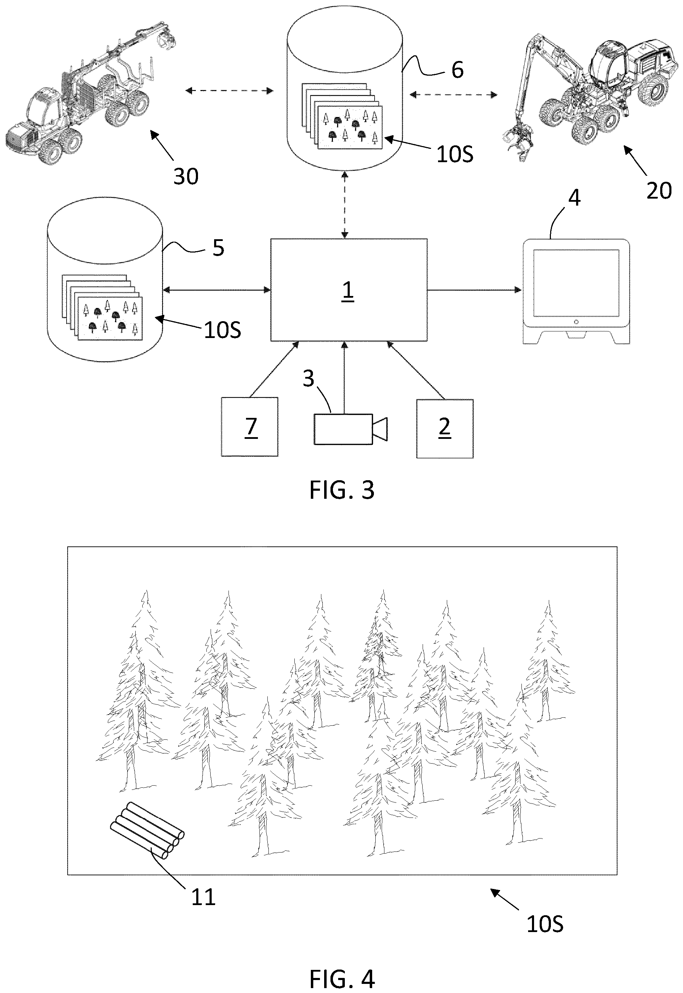

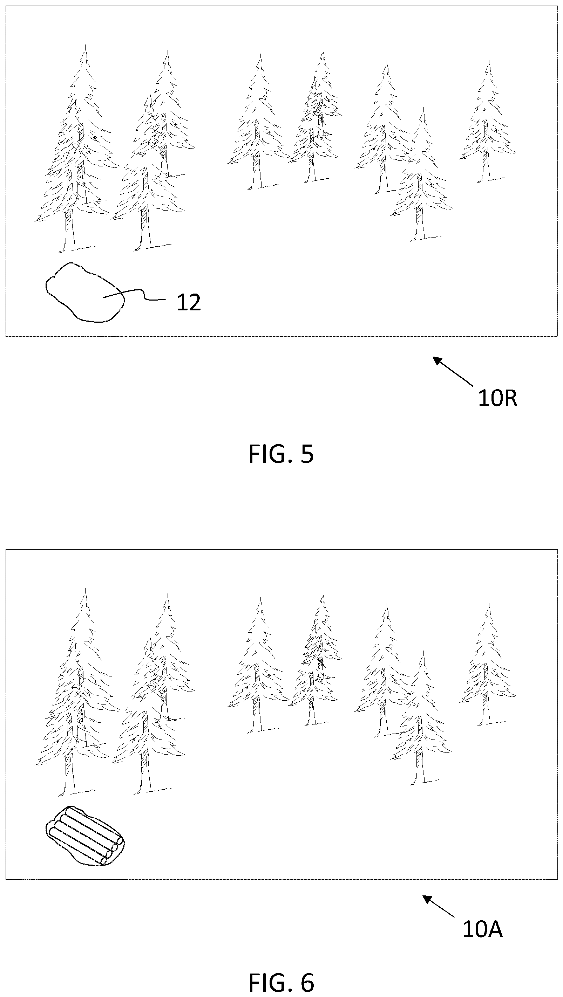

The data processing means 1 can be configured to augment the real time images 10R to show objects that are not visible in the real time images 10R due to the weather conditions, changes in the vegetation and/or darkness. In particular, the data processing means 1 can be configured to augment the real time images 10R to show the locations of logs 11 to the operator of the forestry machine 20, 30. Figure 4 shows an example of an image 10S stored in the data storage 5, 6. The image 10S has been obtained during harvesting or picking of the logs by an imaging device 3 of a harvester 20 or a forwarder 30. The image of figure 4 has been taken in good weather conditions and clearly shows a pile of logs 11. Figure 5 shows a real time image 10R that has been taken later than the stored image 10S of figure 4. Some of the trees that are visible in the stored image 10S of figure 4 have been felled. In addition, the pile of logs 11 has been covered by snow 12.

Figure 6 shows the real time image 10R as augmented by the information contained in the stored image 10S of figure 4. For example to allow the operator of a forwarder 30 to easily locate and pick the logs 11, the real time image 10R has been augmented and displayed as an augmented image 10A to show the logs 11 that are covered by snow 12. In addition to showing the logs 11, the real time image 10R could be augmented to show additional information. For instance, the augmented image 10A could show as a numerical value the number of logs 11 in the pile and/or the volume of the logs 11. The additional information could be obtained by image analysis or by using sensors of the forestry machine 20, 30, or the additional information could be retrieved from the data storage 5, 6. For instance, the volume and the number of logs 11 could have been determined and stored in the data storage 5, 6 during felling and cutting of the trees.

The local data storage 5 and/or the central data storage 6 can comprise images 10S obtained by imaging devices 3 of at least one other forestry machine 20, 30 than the currently operated forestry machine. Two or more forestry machines 20, 30 can thus be configured to communicate with a common central data storage 6. This allows each of the forestry machines 20, 30 to utilize data obtained by the other forestry machines 20, 30. Alternatively, or in addition, the forestry machines 20, 30 can be configured to communicate directly with each other to transmit images to the local data storage 5 of the other forestry machine 20, 30 and/or to retrieve images from the local data storage 5 of the other forestry machine 20, 30. Transmitting and retrieving of data can be continuous or take place periodically. Each forestry machine 20, 30 could thus be configured to transmit the obtained images immediately to the central data storage 6 and/or to the local data storages 5 of the other forestry machines 20, 30. Alternatively, the data could be transmitted for example after each work shift. Similarly, the data processing means 1 of each forestry machine 20, 30 could compare the real time images 10R to the images 10S stored in the central data storage 6 or in the local data storages 5 of the other forestry machines 20, 30 in real time, or the data contained in the central data storage 6 or in the local data storages 5 of the other forestry machines 20, 30 could be downloaded to the local data storage 5 for example prior to each work shift.

In a first step 101 of the method according to the invention, position data of the forestry machine 20, 30 is obtained. In a second step 102 of the method, images are obtained of the surroundings of the forestry machine 20, 30 by means of one or more imaging devices 3. The first step 101 and the second step 102 take place simultaneously. The method can further comprise a step of obtaining orientation data that represents the orientation of each of the imaging devices 3.

In a third step 103 of the method, the obtained position data is linked with the obtained images. Even the third step 103 can take place simultaneously with the first step 101 and the second step 102. Also the orientation data can be linked with the obtained images. Each image may be further assigned a time stamp.

In a fourth step 104 of the method, the images, the position data linked with the obtained images and other possible metadata is stored in a data storage 5, 6. The data storage may be a local data storage 5 or a central data storage 6, or the data can be stored both in the local data storage 5 and the central data storage 6.

In a fifth step 105 of the method, the real time images 10R obtained by the imaging devices 3 are compared to images 10S stored in the data storage 5, 6. The stored images 10S may have been obtained by the imaging devices of the currently operated forestry machine or by imaging devices of other forestry machines.

In a sixth step 106 of the method, the real time images 10R are augmented with information contained in the images 10S stored in the data storage 5, 6. Alternatively, or in addition, the images 10S stored in the data storage 5, 6 are augmented with information contained in the real time images 10R. In a seventh step 107 of the method, the augmented images 10A are displayed to the operator of the forestry machine 20, 30 by means of the display device 4. The augmented images may be either augmented real time images or augmented stored images.

For comparing the real time images 10R and the stored images 10S, different pattern recognition and image processing algorithms can be used.

In addition to the assisting of the operator, the system according to the invention can be utilized for many other purposes. For instance, the stored images and the associated data can show how the work has progressed and how the environmental conditions have changed over time. As an example, if a log is missing from a certain stored image but is present in an earlier version of the image, it can be concluded that the log has been transported away from the worksite. The information contained in the stored images can be combined with other information, such as measurements and information collected during felling and cutting of the trees or during loading of the logs. By combining the data contained in the images with other data, more detailed and robust information can be retrieved.

The image data and associated information can be used for predicting the change in the environmental conditions and the progress of the work and for planning of the upcoming work.

## Claims

1. An assist system for a forestry machine (20, 30), the system comprising
- means (2) for obtaining position data of the forestry machine (20, 30),
- one or more imaging devices (3) configured to obtain images of the surroundings of the forestry machine (20, 30) during operation of the forestry machine (20, 30),
- data processing means (1) configured to link the obtained position data of the forestry machine (20, 30) with the obtained images,
- a data storage (5, 6) configured to store the images obtained by the imaging devices (3) and the position data linked with the obtained images, and
- a display device (4) configured to display images of the surroundings of the forestry machine (20, 30) to an operator of the forestry machine (20, 30) in real time,
wherein the data processing means (1) are configured
- to compare real time images (10R) obtained by the imaging devices (3) to images (10S) stored in the data storage (5, 6),
- to augment the real time images (10R) with information contained in the images (10S) stored in the data storage (5, 6), and/or to augment the images (10S) stored in the data storage (5,6) with information contained in the real time images (10R), and
- to display the augmented images (1 0A) by means of the display device (4) to the operator of the forestry machine (20, 30).

2. The assist system according to claim 1, wherein the data processing means (1) are configured to identify a situation with a reduced visibility and/or a reduced detail level of the real time images (10R), and to carry out the steps of augmenting the images and displaying the augmented images (10A) in case such a situation is detected.

3. The assist system according to claim 1 or 2, wherein the data processing means (1) are configured to augment the images (10S) stored in the data storage (5, 6) based on information contained in the real time images (10R) and to store the augmented versions of the stored images (10S) in the data storage (5, 6).

4. The assist system according to any of claims 1-3, wherein the system comprises one or more sub-systems (7) and/or sensors for obtaining other data than image data of the surroundings of the forestry machine (20, 30), and the data processing means (1) are configured to augment the real time images (10R) and/or the images (10S) stored in the data storage (5, 6) based on the data obtained by said sub-systems (7) and sensors.

5. The assist system according to claim 4, wherein the one or more sub-systems (7) comprise one or more systems from the group of radar, lidar and ultrasonic ranging system.

6. The assist system according to any of the preceding claims, wherein the data processing means (1) are configured to obtain information on the current work phase of the forestry machine (20, 30) and to augment the images based on the work phase.

7. The assist system according to any of the preceding claims, wherein the data processing means (1) are configured to augment the real time images (10R) to show objects (11) that are not visible in the real time images (10R) due to the weather conditions, changes in the vegetation and/or darkness.

8. The assist system according to any of the preceding claims, wherein the data processing means are configured to augment the real time images (10R) to show the locations of logs (11) to the operator of the forestry machine (20, 30).

9. The assist system according to any of the preceding claims, wherein the data storage (5, 6) comprises images (10S) obtained by imaging devices (3) of at least one other forestry machine (20, 30).

10. The assist system according to any of the preceding claims, wherein the system is configured to transmit the obtained images to a central data storage (6) and/or to local data storages (5) of one or more other forestry machines (20, 30) to make the obtained images available to assist systems of said other forestry machines (20, 30).

11. The assist system according to any of the preceding claims, wherein the forestry machine is a harvester (20) or a forwarder (30).

12. A forestry machine (20, 30) comprising the assist system of any of the preceding claims.

13. A computer-implemented method of assisting an operator of a forestry machine (20, 30), the method comprising the steps of
- obtaining position data of the forestry machine (20, 30) (101),
- obtaining images of the surroundings of the forestry machine (20, 30) by means of one or more imaging devices (3) during operation of the forestry machine (20, 30) (102),
- linking the obtained position data of the forestry machine (20, 30) with the obtained images (103),
- storing the images obtained by the imaging devices (3) and the position data linked with the obtained images in a data storage (5, 6) (104),
- comparing real time images (10R) obtained by the imaging devices (3) to images (10S) stored in the data storage (5, 6) (105),
- augmenting the real time images (10R) with information contained in the images (10S) stored in the data storage (5, 6), and/or augmenting the images (10S) stored in the data storage (5, 6) with information contained in the real time images (10R) (106), and
- displaying the augmented images (10A) by means of a display device (4) to the operator of the forestry machine (20, 30) (107).

14. A computer program for assisting an operator of a forestry machine (20, 30), the computer program comprising instructions which, when the program is executed by a computer, cause an assist system comprising one or more imaging devices (3), means (2) for obtaining position data of the forestry machine (20, 30), a data storage (5, 6) and a display device (4) to carry out the method according to claim 13.

15. A computer-readable storage medium having stored thereon the computer program of claim 14.
